Europäisches Patentamt

European Patent Office

Office européen des brevets

(19)

(11) Publication number: 0 248 628
A2

# (12) EUROPEAN PATENT APPLICATION

(21) Application number: 87304840.9

(22) Date of filing: 01.06.87

(51) Int. Cl.4: C08G 18/12 , C08G 18/32 , C08G 18/66

(30) Priority: 02.06.86 US 869230

(43) Date of publication of application:
09.12.87 Bulletin 87/50

(84) Designated Contracting States:
AT BE CH DE ES FR GB IT LI NL SE

(71) Applicant: ICI AMERICAS INC
Concord Pike & New Murphy Road
Wilmington Delaware 19897(US)

(72) Inventor: Gillis, Herbert Russel
Mechelsesteenweg 146
B-1960 Sterrebeek(BE)
Inventor: Ghoussaini, Nizar Nouhad
1256 Hunt Club Lane
Media PA 19063(US)

(74) Representative: Leherte, Georges Maurice
Lucien Marie et al
Imperial Chemical Industries PLC Legal
Department: Patents P.O. Box 6
Welwyn Garden City Herts. AL7 1HD(GB)

(54) Polyurea-Polyurethane from the reaction of a polyol, an aromatic amine and an isocyanate terminated polyoxy-propylene prepolymer.

(57) Mid and high modulus reaction injection molding (RIM) processed polyurea-polyurethanes with excellent tensile strength, green strength, heat resistance and moisture resistance, are prepared in a "prepolymer" RIM process by reacting an organic polyisocyanate with a polyol and a chain extender wherein the polyisocyanate includes an isocyanate terminated prepolymer wherein the isocyanate terminated prepolymer is prepared by reacting an aromatic isocyanate with a polyoxypropylene polyol and a glycol. Polyurea-polyurethane moldings can be prepared from this process.

EP 0 248 628 A2

## POLYUREA-POLYURETHANE FROM THE REACTION OF A POLYOL, AN AROMATIC AMINE AND AN ISOCYANATE TERMINATED POLYOXYPROPYLENE PREPOLYMER

This invention is drawn to mid and high modulus reaction injection molding (RIM) processed polyurea-polyurethanes with excellent tensile strength, green strength, heat resistance and moisture resistance and prepolymers used in the production thereof. Polyurea-polyurethanes are produced in short molding cycle times and find particular utility in automotive parts such as car bumpers, body elements, panels, doors, engine hoods, skirts, and air scoops.

Reaction injection molding, generally referred to as RIM processing, is a polymerization process commonly employed to produce polyurethanes and polyureas. In the RIM process, two highly reactive streams of chemicals are brought together under high pressure, approximately 2,000 psi, in a small mixing chamber where the streams are impingement mixed by being sprayed directly into each other. The mixed streams flow immediately into a mold where the chemical reaction is completed and a resulting part from the chemical reaction is cured.

One of the streams, commonly referred to as Component A, contains a polyisocyanate. The other stream, commonly referred to as Component B, generally contains a high molecular weight polyisocyanate reactive polyether, a chain extender, and various catalysts. The RIM process is widely known and a detailed description of the technology may be found in numerous texts such as, for example, "Reaction Injection Molding" edited by Walter E. Becker, VanNostrand Rienhold Publishers, 1979.

Two generally employed RIM processes are a "one-shot" procedure wherein two streams are brought together simultaneously and allowed to react, and a "prepolymer" procedure where portions of two or more of the chemicals are prereacted and are then brought into contact with the remainder of the chemicals. A one-shot procedure for RIM polyurethaneurea polymers is described in U.S. Patent 4,218,543 wherein the process includes reacting a diphenylmethane diisocyanate, such as MDI, with polymeric hydroxyl containing compounds of molecular weight 1,800 to 12,000, a catalyst and an aromatic diamine chain extender. Due to the high reactivity of the polyisocyanate and polyisocyanate-reactive compounds employed, the reaction mixture is molded in a short time period which can be 3 seconds or less.

In the "one-shot" procedure as described above, the isocyanate is maintained separate from the polymeric polyol. Since the equivalent weight of the isocyanate is much lower than that of the polymeric polyol, the proportion, by weight, in which the isocyanate stream and the combined polyol and diamine stream are brought together, in the mixing head, is substantially less than equal, the isocyanate stream proportion being approximately only about one-half of that of the other stream.

It is generally desirable that the two streams being fed to the high pressure mixing heads in RIM processing be mixed in substantially equal amounts by volume in order to achieve the maximum output per unit of time from the RIM head. Since the mixing of the two streams in the one-shot process is restricted, the process is limited in the maximum output of mixed reactants which can be obtained. This limitation on output, combined with the very short gel times of the reaction mixture produced, places severe limits on the total weight of reactants which can be introduced into any given mold. As a result, the size of any article which can be produced by the reference process is severely limited.

U.S. Patent 4,374,210 describes a prepolymer process wherein a portion of the polyol is incorporated into the isocyanate in a prepolymer form. In particular, the '210 patent discloses a process of reacting Component A, an isocyanate-terminated prepolymer, with Component B, a polyol and chain extender. The prepolymer is prepared by reacting an isocyanate with a polyol having a functionality from 2 to 3, wherein the polyol is selected from the class consisting of copolymers of ethylene oxide and propylene oxide of molecular weights between 1,000 to 10,000, polytetramethylene glycols having molecular weights from about 600 to about 5,000 and polyester polyols having molecular weights from about 500 to 8,000. The isocyanate and the polyol are reacted in the proportion of about 0.01 equivalents to about 0.5 equivalents of the polyol per equivalent of the isocyanate.

By employing such prepolymers, the ratio control of the two streams fed to the mixing head is controllable and, as a result, operation of the RIM process at higher outputs per unit time is permitted. However, it has been found that the resulting polyurea-polyurethane may be too heat and moisture sensitive for some commercial applications. Moisture sensitivity which is the resistance to water absorption, is an important property for polyurea-polyurethanes for automotive applications since molded parts will distort if excess water is absorbed. Water absorption of about 5% by weight is generally accepted as an approximate upper limit for acceptable performance although, it is highly desirable that the water absorption should be as low as possible, preferably, well below 5%.

It is desirable to develop polyurea-polyurethane moldings which are suitable for automotive applications, and more particularly, it is desirable to develop polyurea-polyurethanes which have suitable resistance to heat and water absorption.

This invention provides an improved process for production of polyurea-polyurethane by the reaction of an organic polyisocyanate prepolymer with a polyol and a suitable chain extender in the presence of a catalyst wherein the prepolymer is derived from an aromatic isocyanate having a numbered average functionality of isocyanate groups of between about 1.8 and about 4.0, an equivalent weight of between about 70 and about 1000 and at least 50 mole percent diisocyanates. The process for producing the organic polyisocyanate prepolymer according to the present invention includes reacting an aromatic isocyanate with a polyoxypropylene polyol having a molecular weight of between 600 and 12,000 and a functionality of between 1.8 and 5; and a low molecular weight glycol having a number averaged functionality between 1.85 and 2.45 and a molecular weight of between 70 and 450. The ratio of the glycol to the polyoxypropylene polyol by weight is in the range of between 0.01 and 1.00.

The invention thus provides a process for producing polyurea-polyurethane involving polyisocyanate prepolymer which, apart from any ethylene glycol used as initiator for the polyoxypropylene polyol, is substantially free of ethylene oxide and/or ethylene glycol residues, which process remains nevertheless easily processable.

The invention also includes polyurea-polyurethane moldings prepared using polyurea-polyurethanes prepared in accordance with the above process.

The process of this invention can be carried out using conventional techniques known in the art and employing any standard equipment which will tolerate the relatively low reaction times involved in the process. These reaction times can vary from as low as about 0.5 seconds for gel time up to about 20 seconds.

The elements of the present invention include Component B and Component A which is a prepolymer that is produced by a reaction of a polyoxypropylene polyol, at least one low molecular weight glycol, and an aromatic polyisocyanate. Component B includes a mixture of a polyol, a chain extender, and a catalyst for the reaction between isocyanate groups and active hydrogen-containing groups, and optionally, any other conventional additive normally employed in making such compositions.

A polyurea-polyurethane molding is formed in the RIM process when a stream of Component A, generally referred to as Stream A, is reacted with a stream of Component B, generally referred to as Stream B. The two streams are brought together in such proportions that the ratio of equivalents of isocyanate in Stream A to the total equivalents of active hydrogen containing groups in Stream B is within the range of about 0.75 to about 1.30.

As will be apparent to one skilled in the art, the above range of proportions by equivalents can encompass a wide range of proportions by weight depending on the equivalent weights of the various components involved. In practice the range of proportions by weight of Stream A to Stream B can vary over a wide range from about 0.3:1 to 5:1. However, the more desirable range of proportions when using RIM equipment, is within the range of 0.95:1 to 1.10:1 and in some cases it is preferred that the proportion is substantially equal to 1 by weight. In the present invention, it is possible to achieve a wide range of reaction times depending on the particular application being considered and this, taken together with the ability to use the reaction streams in relatively equal proportions by weight, considerably increases and gives a greater degree of latitude to, the amount of material which can be dispensed into any given mold.

Production of the organic polyisocyanate prepolymer, Component A, is carried out in accordance with well-known techniques. Illustratively, an aromatic isocyanate, polyoxypropylene polyol and the low molecular weight glycols are brought together in an appropriate apparatus and are heated together under an inert atmosphere at a temperature within the range of about 50°C to about 150°C until the reaction is determined to be completed as determined, for example, by titrimetric determination of the free concentration of isocyanate groups in the prepolymer.

Generally, the quantities of isocyanate, polyoxypropylene polyol, and glycols are selected such that the final free isocyanate content of the prepolymer (after all the hydroxyl groups have been converted into urethane bonds) is in the range of 5 to 30 % free isocyanate by weight; preferably 10 to 27 % free isocyanate by weight and most preferably 14 to 24 % free isocyanate by weight. The ratio of the weights of glycols to polyoxypropylene polyols is in the range of 0.01 to 1, more preferable 0.05 to 0.5, and most preferable 0.10 to 0.30.

It is preferred to pre-mix the glycols and the polyoxypropylene polyols to be used into a blend, of the desired composition, and to add the blend to the isocyanate under the desired set of conditions in order to prepare the prepolymer composition intended. In this way, all of the chemical reactions involved are completed in a single step. It is possible, however, to form the prepolymer in several separate steps. For example, the glycols may be reacted first, followed by the polyoxypropylene polyol - or vice versa.

The optimum conditions for the formation of prepolymers from the reaction of aromatic isocyanate and hydroxyl containing materials involves slow addition of the hydroxyl containing material to the isocyanate at between 70 and 90°C, with agitation. The addition rate should be such as to avoid an uncontrolled exothermic reaction, and the duration of the reaction should be as necessary to obtain essentially complete urethanation of the hydroxyl groups.

The prepolymer obtained as described above can be used as such in the reaction injection molding process of the invention and in this case it advantageously has a viscosity (at 25°C) of less than about 8000 cps and preferably the viscosity of the prepolymer is in the range of 300 to 3000 cps. It is desirable that the prepolymer is a stable liquid at about 20°C and above.

The aromatic isocyanate employed in the manufacture of the prepolymers of the present invention will have a number averaged functionality between 1.8 and 4, more preferable between 1.9 and 3, and most preferable between 2.0 and 2.5. The isocyanates will have equivalent weights of between 70 and 1000, more preferable between 85 and 500, and most preferable between 87 and 350. Mixtures of isocyanates may be used, in which case the equivalent weights and functionalities are understood to be number averaged equivalent weights and isocyanate functionalities for the mixture.

At least 50, more preferably 80, and most preferably 90 or more mole percent of the isocyanate-containing molecules in the mixture (or starting "isocyanate") are diisocyanates. It is desirable that at least 51 mole percent, more preferably 80, and most preferably 90 mole percent or greater of the isocyanate groups are bonded directly to aromatic carbon atoms. It is within the scope of the invention that the term aromatic isocyanate as used herein includes minor amounts of aliphatic and/or araliphatic isocyanates into the starting isocyanate.

Examples of suitable isocyanates are 2,4' and/or 4,4'-diphenylmethane diisocyanate ("pure" MDI), 2,4'- and 2,6'-toluene diisocyanate (TDI) and mixtures thereof, isophorone diisocyanate, tetramethylene diisocyanate, pentamethylene diisocyanate, hexamethylene diisocyanate and 4,4'-dicyclohexylmethane diisocyanate. Diisocyanates and/or polyisocyanates wherein the -NCO groups are aromatically bound are especially preferred. Particularly useful is pure MDI and polymethylene polyphenyl isocyanate which is a mixture having at least 2 isocyanate groups per molecule and a functionality averaging between 2.1 and 3 isocyanate groups per mol, most often 2.3-2.7 isocyanate groups per mol, and which is sometimes referred to in the art as "crude MDI."

The isocyanate may further include a uretonimine modified polyisocyanate variant which may be produced as disclosed in U.S. Patents 4,014,935 and 4,031,026 which are herein incorporated by reference. Such variants are produced by first converting the isocyanate group(s) of one of the above-mentioned isocyanates into a carbodiimide group by heating the isocyanate at elevated temperatures and with appropriate catalysts. The uretonimine group is then formed as an adduct of the carbodiimide group and an isocyanate group. The isocyanate employed in the production of such variants is preferably a solid diphenylmethane diisocyanate, for example diphenylmethane-4,4'-diisocyanate, diphenylmethane-2,4'-diisocyanate and mixtures thereof, optionally containing small amounts of other isomers. Substantially pure diphenylmethane-4,4'-diisocyanate is preferably used which includes diphenylmethane-4,4'-diisocyanate containing not more than 10% by weight of other isomers thereof and preferably not more than 3 percent of other isomers.

Suitable catalysts for the conversion of the isocyanate into the carbodiimide group are well known in the art.

Mixtures of two or more different isocyanates may be employed. Especially preferred is a mixture comprising a uretonimine modified diisocyanate variant and a non-variant polyisocyanate, such as pure and/or crude MDI.

The polyoxypropylene polyol used in the production of Component A has a molecular weight of about 600 to about 12,000, with a preferred range of about 1000 to about 4000. It is preferred that the polyoxypropylene polyol used have a number averaged functionality of between 1.8 and 5, and more preferably from 2 to 3.

The polyoxypropylene polyols are prepared by the chemical addition of propylene oxide onto polyfunctional initiators such as water, ethylene glycol, propylene glycol, dipropylene glycol, tripropylene glycol, glycerol, trimethylol propane, bisphenols such as bisphenol A, low molecular weight hydroxy functional adducts and oligomers of phenols with aldehydes and/or ketones, sugars such as glucose or sucrose,

4

mixtures of the above, and the like. In addition to propylene oxide, higher alkylene oxides may also be incorporated into the polyoxypropylene polyol structure in minor amounts. Alkylene oxides such as butylene oxide, for example, may be used either together or sequentially with propylene oxide. Vinyl reinforced polyoxypropylene polyols obtained by polymerizing styrene, acrylonitrile, and like polymerizable monomers in the presence of the polyoxypropylene "base" polyol(s) may be particularly useful.

It is important that the polyoxypropylene polyol remain substantially free of ethylene oxide or polymers thereof. Mixtures of polyoxypropylene polyols may be used to prepare the prepolymers of the invention, provided that the number averaged molecular weight and functionality fall within the ranges specified above. The range of equivalent weights (defined as molecular weight divided by functionality) for the polyoxypropylene polyols (or individual polyols within a mixture of said polyols) is from 300 to 12,000, preferably from 500 to 2500, and most preferable from 1000 to 2000.

Component A further includes a glycol or a mixture of glycols wherein the term glycol includes diols or a mixture of diols. One preferred glycol mixture consists of a 50:50 weight per weight (w/w) mixture of tripropylene glycol and dipropylene glycol. Further examples of glycols which may be used, either independently or together with the above, include oligomers of propylene oxide or propylene oxide with butylene oxide having molecular weights of under 450 and preferably under 350, 1,3-butanediol, 2,3-butanediol, N,N-di(2-hydroxypropyl)aniline, 1,2-butylene glycol, 1,3-propylene glycol, 1,2-propylene glycol, 1,4-butanediol, neopentyl glycol, dipropoxylated bisphenol A, mixtures of the above, and the like. The glycol, or mixture of glycols, employed should be substantially free of ethylene oxide oligomers and should have a number averaged molecular weight of between about 70 and 450, preferably between 100 and 250 and most preferable between 100 and 200.

It is preferable that the number averaged equivalent weight of the glycol composition should be lower than 100, more preferable lower than 80, and most preferable around 60 or lower. In this way, the heat resistance of the polyurea-polyurethane is further improved.

A mixture of 3 or more constituent glycols may be employed. The proportions of the three or more glycols contained in the mixture may vary widely, and in part the proportions will be dependent on the particular glycols used. Although proportions outside this range may be used, convenient mixtures of glycols are those wherein the molar percentage of any one of the glycols is not more than 70% and not less than 15% of total glycols used. Compositions wherein the molar percentage of any one of the glycols is not more than 50% and not less than 25% of the total glycols are particularly useful in this invention. Where more than three glycols are used, the constituents of the alkylene glycol mixture are preferably selected such that no more than two of the glycols are other than dipropylene glycol, tripropylene glycol, butylene glycol or a higher polypropylene glycol.

Preferred mixtures of glycols are mixtures of dipropylene glycol or tripropylene glycol with two other alkylene glycols each of which has at least one secondary hydroxyl group. It is preferred that in such mixtures the dipropylene glycol or the tripropylene glycol is present in an amount of 27-45 molar percent, for example 27-45 molar percent of the total glycols, and that the two other alkylene glycols are in approximately equal molar proportions.

The glycols may also contain minor amounts of higher functionality low molecular weight polyols. Such polyols include glycerol, trimethylolpropane, dipropanolamine, pentarythritol, mixtures of these, and like materials. The number averaged functionality of these higher functionality low molecular weight polyols or mixtures of polyols used in the glycol should be between 2 and 5, more preferable between 2 and 4, and most preferable between 2 and 3.

The maximum molecular weight of any of the above-described low molecular weight polyols used in the glycol should not exceed 450 and preferably should not exceed 300. It is preferable that the equivalent weights of each and any of these higher functionality additives should range between 50 and 100 and more preferable between 60 and 100.

The total amount of the higher functionality species incorporated into the compositions which are referred to hereinabove as "glycols" should be such that the number averaged hydroxyl functionality of the final glycol composition in the range of about 1.85 to about 2.45, and more preferable in the range of about 1.95 to about 2.20. Other specifications pertaining to the compositions referred to hereinabove as "glycols" remain as defined above.

It is desirable that the prepolymers used as the Component A in the process of the instant invention have final number averaged isocyanate functionalities in the range of 1.9 to 2.5, more preferable between 2.0 to 2.3, and most preferable between 2.01 to 2.25.

Component B which includes the polyol, chain extender and the catalyst, is produced by combining the ingredients by simple mixing at a temperature between -20°C to 150°, preferably between 20°C to 80°C until a homogenous blend or a stable dispersion is obtained. The B-component blends should be prepared in an inert, anhydrous atmosphere.

Chain extenders used in this invention may be a $C_2$-$C_{30}$-aliphatic, $C_4$-$C_{30}$-cycloaliphatic, aromatic, or aralaphatic polyamine or combinations thereof. Suitably employed as aliphatic and cycloaliphatic amines are ethylene diamine, propylene diamine, diethylene triamine, hexa methylene diamine, amine terminated polyoxypropylene oligomers of under 500 molecular weight, trimethyl hexamethylene diamine, isophorone diamine, 1-amino-3-amino-3,5,5-trimethyl cyclohexane, fully or partially hydrogenated di(aminophenyl)-methane, piperazine, hydrogenated methylene dianiline, diamino menthane, and hydrogenated toluene diamine. The most useful of these are those that are liquids below about 110°C.

Aromatic diamines are preferable chain extenders. It is preferred to use aromatic diamines which have at least one linear alkyl substituent in ortho position to the one amino group and two linear alkyl substituents, preferably with 1 to 3 carbon atoms, in both ortho positions of the other amino group. Most preferred are those diamines which have an alkyl substituent in all ortho positions to both amino groups.

The aromatic diamines can also be used in admixture with other aromatic and/or aliphatic diamines. It is highly desirable that a major portion (over 50 mole percent) of the isocyanate reactive aromatic amine groups within the chain extender composition are primary amine groups. It is, however, within the scope of this invention to employ chain extender compositions or blends in which a minor portion of the isocyanate reactive aromatic amine groups are secondary amines. Specific examples of suitable secondary amines would include such substances as N,N'-dimethyl methylenedianiline, N-monomethyl 2,6-toluene diamine, mixtures of these, and like materials.

The preferred range of amine equivalent weights for the chain extender compositions employed in the practice of the instant invention is about 35 to about 500, a more preferable range of about 50 to about 250, and a most preferable range of about 60 to about 200. These equivalent weights are number averaged. The preferred range of number averaged, isocyanate reactive, amine functionality for the chain extender compositions of the invention extends from 1.8 to 3.0, a more preferable range of from 1.9 to 2.5, and a most preferable range of from 2.0 to 2.2.

It is preferred that the level of monofunctional ingredients in the chain extender composition is less than 15 mole percent of the total. It is more preferable that the level of monofunctional ingredients is less than 10 mole percent, and most preferable less than 5 mole percent.

The chain extenders commonly employed are described in various patents, including U.S. Patents 3,428,610; 4,218,543; 4,374,210; 4,396,729; 4,288,564; 4,298,701; 4,296,212; 4,379,105 and 4,442,235. Examples of diamine chain extenders include toluenediamine including 2,4-and 2,6-diaminotoluenes; 2,5-diaminoxylene; 1,3-diethyl-2,4-diaminobenzene; 1,3-dimethyl-2,4-diaminobenzene; 2,4-diaminomesitylene; 1-ethyl-2,6-diaminobenzene; 1-methyl-3,5-diethyl-2,4-diaminobenzene; 1-methyl-3,5-diethyl-2,6-diaminobenzene; 1,3,5-triethyl-2,6-diaminobenzene; 3,5,3',5'-tetraethyl-4,4'-diaminodiphenylmethane; 2,6-diethylnaphthylene-1,5-diamine; 2-ethyl-1,3-diaminobenzene; 4,4'-diaminodiphenylmethane; 1,2-, 1,3-or 1,4-phenylene diamine; 2,4'-or 4,4'-diaminodiphenylmethane; naphthylene-1,5-diamine; triphenylmethane-4,4'-4''-triamine. A more preferred chain extender is 1,3,5-triethyl-2,6-diaminobenzene. The most widely used amine chain extender is an 80:20 (w/w) mixture of 3,5-diethyl-2,4-diaminotoluene and 3,5-diethyl-2,6-diaminotoluene. This mixture is universally referred to as DETDA.

The polyols which are employed in combination with the chain extender in Component B have molecular weights within the range of about 1,000 to about 10,000 and can be any polyol known in the art with a functionality from about 2.0 to about 4.0. The choice of polyol to be used in any given formulation will depend on the specific polymeric properties required in the end-product. Generally speaking, the preferred functionality is from about 2.0 to about 3.0 and the preferred molecular weight range is from about 2,000 to about 16,000.

Illustrative, but not limiting, of the classes of polyols which can be used are the polyoxyalkylene poly ethers; polyester polyols; polyol adducts derived from reaction of propylene oxide with a mixture of methylene-dianiline and/or polymethylene polyphenylamines (in accordance, for example, with U.S. Patent No. 3,423,344); polyols obtained by the Mannich condensation of a phenolic compound with formaldehyde and an alkanolamine, followed by reaction with propylene oxide (in accordance, for example, with U.S. Patent No. 3,297,597); vinyl reinforced polyether polyols, e.g., those obtained by the polymerization of styrene or acrylonitrile or similar vinyl monomers in the presence of the polyether; polyacetals, prepared for example, from glycols such as diethylene glycol and formaldehyde; polycarbonates, for example those derived from reaction of butanediol with diarylcarbonates; polyester amides; the resole polyols (see Prep. Methods of Polymer Chem. by W. R. Sorenson et al., 1961, page 293, Interscience Publishers, New York, NY); and the polybutadiene and butadiene-acrylonitrile copolymer resins having primary hydroxyl groups.

Another group of suitable polyols include the propyleneoxy-polyethyleneoxy capped diols and triols obtained by the reaction of ethylene and propylene oxides, together or sequentially using as initiator water, ammonia, ethylene glycol, propylene glycol, trimethylolpropane, aniline, ethanolamine, mixtures of these or like materials; the polyester diols obtained from the reaction of dibasic carboxylic acids such as succinic, adipic, suberic, azelaic, phthalic, isophthalic, and the like with alkylene glycols, and oxyalkylene glycols to form the corresponding polyalkylene, and polyoxyalkylene ester diols or copolymers thereof, the polycarbonate diols and/or polyols obtained from the polymerization of aliphatic, aromatic, aralaphatic, or mixed polyols with either phosgene or cyclic organic carbonates; and the vinyl-resin reinforced propyleneoxy-yethyleneoxy capped diols and triols, particularly those polyethers reinforced with polyacrylonitrile or styrene-acrylonitrile copolymer.

A mixture of two or more of any of the above stated polyols may also be employed.

A preferred group of polyols to be employed in Component B are the vinyl-resin reinforced propyleneoxy-ethyleneoxy capped diols and triols.

It is desirable that the location of the polyethyleneoxy portion of said polypropyleneoxy-polyethyleneoxy "capped" diols should be at the end (OH-termini) of the polyether chain, in both the pure "base" polyols and in their vinyl resin reinforced derivatives. It is desirable that the internal, or "backbone", portion of said polyether polyols be free of ethylene oxide units; and that the level of ethylene oxide capping be as low as possible while insuring that a majority of the hydroxyl termini (that is, at least 50 mole percent, more preferable at least 75 mole percent, and most preferable at least 85 mole percent) are primary hydroxyl groups (the minority being secondary hydroxyls). It is preferred that the level of ethylene oxide ("cap") in the polyol account for less than 25% by weight of the total alkylene oxide monomer segments in the final polyol. It is more preferred that this level of capping be under 15 percent.

In another embodiment of this invention, a minor portion of the hydroxyl groups in the polyol or polyol blend used to prepare the B-Component are replaced by isocyanate reactive amine groups. The amine groups account for less than 50 mole percent of the isocyanate reactive functionality of the polyol or polyol blend. This may be accomplished, for example, by partially aminating a polyoxypropylene polyol, according to a process analogous to that discussed in U.S. Patent 3,654,370. Alternatively, minor amounts of amine terminated polyoxypropylene polyethers may be incorporated into the polyol blend which is used to prepare the Component B.

It is preferred that the final number averaged functionality of the polyol blend (hydroxyl and amine functionality combined) should be in the range of 1.9 to 4, a more preferable range of 2 to 3; and that the level of monofunctional ingredients in said polyol composition be less than 20 mole percent of said blend, more preferable less than 10 percent and most preferable less than 5.

The proportions within which the chain extender and the polyol can be employed in Component B can vary over a wide range provided that the ratio in which the streams of Components A and B are mixed is such that the overall ratio of equivalents of active hydrogen containing groups in Component B and the total equivalents of isocyanate groups in Component A is within the range of about 0.75 to 1.30.

In addition to the polyol and chain extender employed in Component B of this invention, there is also employed a catalyst for the reaction between hydroxyl and isocyanate groups. Generally speaking, this catalyst is introduced by incorporating it in Component B when operating under the RIM process.

Any of the catalysts conventionally employed in the art can be employed for this purpose; see, for example, Saunders et al., Polyurethanes, Chemistry and Technology, Part I, Interscience, New York, 1963; pages 228-232; see also, Britain et al., J. Applied Polymer Science, 4, 207-211, 1960. Such catalysts include organic and inorganic acid salts of, and organometallic derivatives of, bismuth, lead, tin, iron, antimony, uranium, cadmium, cobalt, thorium, aluminum, mercury, zinc, nickel, cerium, molybdenum, vanadium, copper, manganese and zirconium, as well as phosphines and tertiary organic amines. Representative organotin catalysts are stannous octoate, stannous oleate, dibutyltin diacetate, dibutyltin dioctoate, dibutyltin dilaurate, dibutyltin maleate, dibutyltin mercaptopropionate, dibutyltin didodecylmercaptide, and dibutyltin bis(isooctylthioglycolate). Representative tertiary organic amine catalysts are triethylamine, triethylenediamine, N,N,N',N'-tetramethylethylenediamine, N,N,N',N'-tetraethylethylenediamine, N-methyl-morpholine, N-ethylmorpholine, N,N,N',N',N''-pentamethylguanidine, N,N,N',N'-tetramethyl-1,3-butanediamine, N,N-dimethylethanolamine, N,N-diethylethanolamine, N-methyldiethanolamine, and N,N-dimethylcyclohexylamine and mixtures of the above in any combination.

The preferred catalysts are the organo-metallic compounds and particularly the dialkyl tin salts such as the dibutyltin compounds noted above. It is preferable to use mixtures of the organotin catalysts with one or more tertiary amine catalysts, wherein the (molar) ratio of tin to tertiary amine nitrogen is in the range of 0.01 to 100 and preferably in the range of 0.1 to 10.

The amount of catalyst employed in any given situation will depend upon the nature of the other components of the mixture, the desired reaction times, and other reaction conditions such as temperatures and mixing pressures. Generally speaking, the total amount of catalyst employed is within a range of about 0.01 percent by weight to 5 percent by weight, preferably from about 0.05 to 2 percent by weight based on total weight of the reaction mixture, or between 0.02 to 10 weight percent of the total weight of Component B, more preferably between 0.04 and 6, and most preferably between 0.10 and 4 percent by weight of Component B.

In addition, the process of the invention permits a wider range of proportions by weight of Component A to Component B in a RIM type reaction or in any other type of processing procedure involving high-pressure mixing which can accommodate the above range of gel times to be used. Thus, the proportion of the prepolymer to the combination of diamine and polyol employed in the reaction mixture can be varied by appropriate adjustment of one or more of various factors. These factors include adjustment of the free isocyanate content of the prepolymer; wherein the higher the isocyanate content of the prepolymer, the greater the proportion of active hydrogen containing materials required in the combination of polyol and diamine to achieve the desired ratio of isocyanate to active hydrogen groups within the ranges set forth previously. Other factors readily recognized by one skilled in the art are the molecular weights of the polyols, and the glycols used to prepare the components, the molecular weights of the diamines, and the proportions in which the diamine and polyol are present within the reaction mixture.

In addition to the reaction components discussed above which are employed in the process of the invention, there can be present, generally in Component B, when operating in accordance with the RIM procedure, other optional additives such as dispersing agents, stabilizers, surfactants, flame-retardants, pigments, reinforcing agents, fibers, and anti-oxidants. The use of such optional ingredients is well known in the art.

The examples which follow exemplify the improvement obtained by this invention. However, these examples are not intended to limit the scope of the invention. The Glossary set forth below defines the terms used in the examples.

## GLOSSARY

DETDA
80:20 (w/w) mixture of 3,5-diethyl-2,4-diaminotoluene and 3,5-diethyl, 2,6-diaminotoluene. This product is commercially available from Ethyl Corp.

UL-28
An organo tin catalyst available from Witco Corp.

Dabco 33 LV
A 33% solution of triethylene diamine in dipropylene glycol, a product of Air Products Inc.

LF-168
A uretonimine modified 4,4'-diphenylmethane diisocyanate having an average NCO equivalent weight of about 143, a product of Rubicon Chemicals, Inc.

G-5000
A glycerol initiated polyoxypropylene triol of molecular weight 5000, a product of Texaco Chemical Co., Inc.

Pure 4,4'-MDI
4,4'-diphenylmethane diisocyanate commercially available from Rubicon Chemicals as Rubinate-44.

Mixed Glycol I
A mixture of tripropylene glycol/propylene glycol/butylene glycol on an equivalent basis of 1/.8/.8 and on a weight basis of 3.16/1.0/ 1.18.

Tripropylene Glycol
Commercially available from Dow.

XAS-10887.00
A blend of ethylene oxide capped polyether polyol comprising mould release additives available from Dow.

XAS-10887.01
A blend of ethylene oxide capped polyether polyol comprising mould release additives available from Dow.

XAS-10888.02

A blend of ethylene oxide capped polyether polyol comprising mould release additives available from Dow.

LHT-34

A 5000 molecular weight polyoxypropylene triol commercially available from Union Carbide.

Examples

Preparation of Prepolymers

The prepolymer, Component A, in Example 1 was prepared by charging 87.38 pounds (51.4 parts) of pure 4,4'-MDI into a 20 gallon stainless steel kettle whereafter the charge was heated to 80°C. The polyol consisting of 12.4 pounds (7.3 parts) of tripropylene glycol, 45.65 pounds (26.85 parts) of XAS-10887.01 polyol, and 7.6 pounds (7.47 parts) of XAS-10887.00 polyol were blended and the polyol mixture was added to the MDI charge. The combined mixture was maintained at 80°C (176°F) for one hour whereafter the mixture was cooled to 140°F. After the mixture was cooled for 140°F, 17 pounds (10.0 parts) of uretonimine modified 4,4'-diphenylmethane diisocyanate, LF-168, was added. The mixture was drained into a 55 gallon drum after about 25 minutes. A second charge of the same materials and procedure was also done and the prepolymers of the two charges were blended.

The prepolymer, Component A, in Example 2 was prepared by the same procedure as used in preparing the prepolymer for Example 1 except the following quantities of materials were used:

|                      | Weight (Pounds) | Parts |
| -------------------- | --------------- | ----- |
| Pure 4,4'-MDI        | 72.76           | 42.8  |
| Tripropylene Glycol  | 10.06           | 5.92  |
| XAS-10887.01         | 45.65           | 26.85 |
| XAS-10887.00         | 7.60            | 4.47  |
| LF-168               | 34.0            | 20.0  |

Only one charge of Component A for Example 2 was prepared.

The prepolymer, Component A, for Example 3 was prepared by charging 236.9 pounds (47.38 parts) of pure 4,4'-MDI into a 100 gallon reactor whereafter the charge was heated to 150°F. The polyols consisting of 23.1 pounds (4.62 parts) of mixed glycols and 140 pounds (28.0 parts) of G-5000, a glycerol initiated polyoxypropylene were fed into the reactor over a 25 minute period whereafter the temperature of the charge was raised to 80°C (176°F). However, due to the exothermic reaction, the temperature of the charge varied from 176°F up to 184°F and down to 170°F over a 45 minute period. When the charge reached 170°F, 100 pounds (20 parts) of uretonimine modified 4,4'-diphenylmethane diisocyanate, LF-168, was added. After a period of 30 minutes, the charge cooled to 150°F whereafter it was drained into 55 gallon drums.

Component B in Examples 1, 2 and 3 is a blend according to respective weights of the elements listed in the table.

Component A and Component B were transferred to respective storage tanks located on a Cincinnati Milicrom Mini Rim 90 machine with the Firebird fascia tool wherefrom the polyurea-polyurethanes would be produced. The Components A and B of this invention were maintained at about 95°F. The mold temperature was maintained at between 155 and 160°F and the injection rate was 5.5 The parts were released from the mold in the time as shown in the table and had the properties and characteristics as listed in the table.

|  | Example No. | | |
|---|---|---|---|
| Comp. A (wt. % of A) | 1 | 2 | 3 |
| Pure 4,4'-MDI | 51.4 | 42.8 | 47.38 |
| Mixed Glycol I | -- | -- | 4.62 |
| Tripropylene Glycol | 7.3 | 5.92 | -- |
| LF-168 | 10 | 20 | 20 |
| LHT-34 | -- | -- | 28 |
| XAS-10887.00 | 26.85 | 26.85 | -- |
| XAS-10887.01 | 4.47 | 4.47 | -- |
| Analysis % NCO | 16.25 | 16.67 | 17.85 |
| Viscosity, cps at 25°C | 2665 | 1909 | 2493 |
| | | | |
| Comp. B (wt. % of B) | | | |
| XAS-10888.02* | 78.82 | 78.28 | 80.00 |
| DETDA | 21.18 | 21.72 | 20.00 |
| UL-28 | 0.075 | 0.075 | 0.075 |
| Dabco 33LV | 0.075 | 0.075 | 0.075 |
| Hardblock % | 42.6 | 42.8 | 41.9 |
| Ratio A/B | 0.820 | 0.817 | 0.727 |
| | | | |
| Processing | | | |
| Component A Temp °F | 83 | 85 | 95 |
| Component B Temp °F | 115 | 113 | 95 |
| Mold Temp | 150-155 | 150-155 | 155-160 |
| Injection rate (p/s) | 6.0 | 6.0 | 5.5 |
| Demold Time (sec.) | 30 | 30 | 20 - 30 |

| Double Fold Test | | | | | |
| --- | --- | --- | --- | --- | --- |
| Craze | No | Yes | No | Slow | No | Very Slow |
| Cracks | No | Yes | No | No | No | No |

### Properties

| | | | |
| --- | --- | --- | --- |
| Hot Tear Strength (pli) | 44 | 42 | 44 |
| Elongation, % | 312 | 277 | 312 |
| Heat Sag, 250°F 1 hr. (in/6 in.) | 1.75 | 1.35 | 1.55 |
| Hardness, Shore D | 48-50 | 50-55 | 48-54 |
| Tear Strength, (pli) | 396 | 389 | 437 |
| Flex. Mod., psi x $10^3$ | | | |
| 73°F | 27.6 | 27.9 | 31.6 |
| 158°F | 17.1 | 19.2 | 21.1 |
| -20°F | 54.3 | 54.1 | 55.1 |
| Flex. Mod. Ratio (- 20/150°F) | 3.17 | 2.82 | 2.61 |

Examples 1 and 2 are prior art formulations whereas Example 3 is a formulation according to the present invention. The polyurea-polyurethane molding according to the present invention has improved heat sag characteristics as well as increased flexural modules.

### Claims

1. A process for producing a polyurea-polyurethane, comprising reacting, in the presence of a catalyst, a polyol, a suitable chain extender, and an organic polyisocyanate prepolymer derived from an aromatic polyisocyanate having a number-averaged isocyanate functionality between about 1.8 and about 4.0 and an equivalent weight of between about 70 and about 1000, said polyisocyanate also comprising at least 50 mole percent diisocyanates, wherein said organic polyisocyanate prepolymer is produced by a process comprising reacting said aromatic polyisocyanate with

(i) a polyoxypropylene polyol having a molecular weight between 600 and 12,000 and a number-averaged functionality between 1.8 and 5, and

(ii) a glycol having a number-averaged molecular weight between about 70 and about 450, the weight ratio of said glycol (ii) to said polyoxypropylene polyol (i) being in the range of about 0.01 to about 1.00.

2. A process as defined in claim 1, wherein said glycol is a composition comprising, in addition to glycol, a polyol having a molecular weight less than 450 and a number-averaged functionality between 2 and 5, said polyol being present in an amount such that the number-averaged hydroxyl functionality of said composition is about 1.85 to about 2.45.

3. A process according to claim 1 or 2 wherein said chain extender comprises an aromatic diamine.

4. A process according to any one of the preceding claims wherein said glycol comprises a mixture of tripropylene glycol and dipropylene glycol.

5. A process according to any one of the preceding claims wherein said glycol comprises a mixture of three glycols wherein each glycol makes up at least 15 mole percent of said glycol mixture.

6. A process according to any one of the preceding claims wherein said ratio of said glycol to said polyoxypropylene polyol by weight is in the range of between about 0.05 to about 0.50.

7. A process according to any one of the preceding claims wherein said organic polyisocyanate prepolymer has a final number averaged isocyanate functionality in the range between about 1.9 and about 2.5, and said aromatic isocyanate having a number averaged functionality of isocyanate groups of between

11

about 1.9 and about 3.0, an equivalent weight of between about 85 and about 500, and comprising at least 80 mole percent diisocyanates; and said polyoxypropylene polyol has an equivalent weight of between 1000 and 4000 and a number averaged functionality of between 2 and 3; and said glycol having a molecular weight of between about 100 and about 250.

8. A process according to claim 7 wherein said organic polyisocyanate prepolymer has a final number-averaged isocyanate functionality in the range between about 2.0 and about 2.3 and said aromatic isocyanate having a number averaged functionality of isocyanate groups of between about 2.0 and about 2.5, an equivalent weight of between about 87 and about 350, and comprising at least 90 mole percent diisocyanates; and said ratio of said glycol to said polyoxypropylene polyol by weight is in the range of between about 0.1 and about 0.3.

9. A process for producing a polyurea-polyurethane molding comprising mixing, under high pressure in a reaction injection molding process, a stream A and stream B, wherein :

said stream A comprises an organic polyisocyanate prepolymer which is the reaction product of reactants comprising

(i) an aromatic polyisocyanate having a number-averaged isocyanate functionality between about 1.8 and 4.0, an equivalent weight between about 70 and about 1000, and which comprises at least 50 mole percent diisocyanates,

(ii) a polyoxypropylene polyol having a molecular weight between 600 and 12,000, and a number-averaged functionality between 1.8 and about 5, and

(iii) a glycol having a number-averaged molecular weight between 60 and 450, wherein the weight ratio of said glycol (ii) to said polyoxypropylene polyol (iii) is between 0.01 and about 1.00;

said stream B comprises a blend of a polyol having a molecular weight from about 1000 to about 10,000 and a functionality between 2.0 and 4.0, a chain extender, and a catalyst for the reaction between hydroxyl groups and isocyanate groups, and wherein said streams A and B are mixed and reacted in weight proportions within a range of about 0.3:1 to about 3:1 parts of stream A per part of stream B and such that the ratio of isocyanate groups in stream A to the total active hydrogen-containing groups in stream B is from about 0.75 to about 1.30.

10. A process in accordance with claim 9 wherein said chain extender is a mixture of aromatic and aliphatic polyamines, having a number averaged amine functionality in the range of 1.90 to 2.25 and having a number-averaged amine equivalent weight of 250 or less.

11. A polyurea-polyurethane prepared in accordance with any one of the preceding claims.